# FASCICULE DE BREVET EUROPEEN

(11) **EP 4 162 847 B1**
(45) Date de publication et mention de la délivrance du brevet: **17.07.2024**
(21) Numéro de dépôt: 22198538.5
(22) Date de dépôt: 28.09.2022
(51) Int. Cl.: A47J 31/46, A47J 31/44

(54) **MACHINE A CAFÉ AUTOMATIQUE MUNIE D'UNE POMPE AVEC UN DISPOSITIF D'AMORTISSEMENT AMELIORÉ**
KAFFEEMASCHINE MIT EINER PUMPE MIT VERBESSERTER DÄMPFUNGSEINRICHTUNG
AUTOMATIC COFFEE MACHINE WITH PUMP WITH IMPROVED DAMPING DEVICE

(30) Priorité: 07.10.2021 FR 2110632
(43) Date de publication de la demande: 12.04.2023
(73) Titulaire: SEB S.A., 69130 Ecully (FR)
(72) Inventeur: CHAUVET, Bernard, 69134 Ecully Cedex (FR); EVRARD, Yoann, 69134 Ecully Cedex (FR)
(74) Mandataire: SEB Développement

(56) Documents cités:
- WO-A2-2011/107574
- WO-A2-2013/011475
- CN-A- 111 631 602
- DE-U1- 202014 010 335
- US-A1- 2017 099 982

## Description

### Domaine technique

La présente invention concerne le domaine technique général des machines à café automatiques, plus particulièrement des machines à café automatiques qui comportent une pompe de transfert de fluide générant des vibrations.

### Etat de la technique

Il est connu du document EP2542128 une machine à café automatique comportant une pompe. La pompe comprend un orifice d'entrée, un orifice de sortie, un système d'entraînement de liquide pour mettre sous pression et faire circuler un liquide, notamment de l'eau, de l'orifice d'entrée vers l'orifice de sortie et un conduit aval reliant en communication fluidique le système d'entraînement à l'orifice de sortie de pompe. Le conduit aval comprend un dispositif amortisseur pour amortir les vibrations générées par le système d'entraînement dans le liquide sous pression qui circule vers l'orifice de sortie. Le conduit aval est formé par une portion rigide d'un seul tenant qui s'étend depuis le système d'entraînement jusqu'à l'orifice de sortie de pompe.

Cependant, le dispositif amortisseur peut générer également des vibrations qui sont transmises en retour à la pompe et au bâti de la machine par la portion rigide, ces vibrations créant des nuisances essentiellement sonores.

De plus, le conduit aval rigide muni du dispositif d'amortissement forme sur la pompe une excroissance importante qui peut poser des problèmes d'agencement de la pompe à l'intérieur de la machine à café automatique.

### Résumé de l'invention

La présente invention vise à remédier à ces inconvénients.

Le problème technique à la base de l'invention consiste à proposer une machine à café automatique comportant une pompe qui présente un fonctionnement avec des nuisances réduites, notamment des nuisances sonores et/ou vibratoires.

Un autre but de l'invention est de proposer une machine à café automatique qui présente une conception compacte, simple et économique à mettre en oeuvre.

A cet effet, l'invention a pour objet une machine à café automatique comportant une pompe comprenant un orifice d'entrée, un orifice de sortie, un système d'entraînement de liquide pour mettre sous pression et faire circuler un liquide de l'orifice d'entrée vers l'orifice de sortie et un conduit aval reliant en communication fluidique le système d'entraînement à l'orifice de sortie de pompe, ledit conduit aval comprenant un dispositif amortisseur pour amortir les vibrations générées par le système d'entraînement dans le liquide sous pression qui circule vers l'orifice de sortie, caractérisée en ce que le conduit aval comporte une portion souple agencée entre le système d'entrainement et le dispositif amortisseur et en ce que le dispositif amortisseur est agencé dans un support souple.

Par le dispositif amortisseur est agencé dans un support souple, on comprend que le support souple est dissocié de la pompe.

Ainsi, la portion souple du conduit aval découple le dispositif amortisseur du système d'entraînement de la pompe. Les vibrations induites par le dispositif amortisseur sont amorties par le support souple. En conséquence, les nuisances, notamment sonores s'en trouvent réduites.

De plus le support souple muni du dispositif amortisseur peut être positionné dans l'espace disponible dans la machine à café automatique et facilement relié au système d'entraînement de la pompe par le conduit souple.

Avantageusement, la portion souple s'étend sur une longueur supérieure à deux centimètres.

Une telle disposition permet de découpler efficacement le dispositif amortisseur du système d'entraînement de la pompe
De préférence, la portion souple s'étend de manière rectiligne.

Avantageusement, le dispositif amortisseur comporte un corps supérieur, un corps inférieur et une membrane souple, la membrane souple étant agencée entre le corps supérieur et le corps inférieur.

De manière avantageuse, le corps supérieur et le membrane souple définissent une cavité d'amortissement munie d'un canal d'entrée et d'un canal de sortie et le corps inférieur et la membrane souple définissent une cavité fermée remplie d'air.

De préférence, le support souple est réalisé en un matériau choisi parmi le support souple est réalisé en un matériau choisi parmi un silicone, un caoutchouc, ou un élastomère thermoplastique.

De tels matériaux permettent de maintenir efficacement le dispositif amortisseur tout en filtrant les vibrations.

Avantageusement, la machine à café automatique comporte un bâti, le support souple étant fixé sur le bâti.

Ainsi, le support souple muni du dispositif amortisseur n'est pas fixé directement sur la pompe pour améliorer le découplage du dispositif amortisseur du système d'entraînement de la pompe

De préférence, le support souple comporte un logement de réception du dispositif amortisseur et au moins deux pieds agencés latéralement au logement de réception et le bâti comporte un socle comprenant au moins deux éléments de réception, les au moins deux pieds étant engagés dans les au moins deux éléments de réception.

Un tel agencement permet de loger le support dans un espace réduit.

Avantageusement, le bâti comporte un boitier latéral, le boitier latéral comportant une paroi inférieure qui coiffe le support souple pour le maintenir sur le bâti.

Une telle disposition permet une construction compacte de la machine à café automatique.

De préférence, le logement de réception comporte une ouverture supérieure d'introduction du dispositif amortisseur.

Ainsi, la paroi inférieure du boitier latéral maintient le dispositif amortisseur en place dans le logement de réception.

De préférence, la pompe est une pompe électromagnétique et le système d'entraînement de liquide comporte un piston et une bobine.

Une telle pompe est particulièrement économique.

### Brève description des figures

On comprendra mieux les buts, aspects et avantages de la présente invention, d'après la description donnée ci-après d'un mode particulier de réalisation de l'invention présenté à titre d'exemple non limitatif, en se référant aux dessins annexés dans lesquels :
La figure 1 est une vue en perspective d'une machine à café automatique comportant une pompe selon un mode particulier de réalisation de l'invention.
La figure 2 est une vue en perspective écorchée suivant une direction II de la machine à café automatique illustrée sur la figure 1, une partie du bâti étant retirée.
La figure 3 est une vue en perspective éclatée suivant une direction III du bâti, du support souple et du dispositif amortisseur de la machine à café automatique illustrée sur la figure 1.
La figure 4 est une vue en coupe suivant le plan de coupe vertical suivant la ligne IV-IV du dispositif amortisseur de machine à café automatique de la figure 1.

Seuls les éléments nécessaires à la compréhension de l'invention ont été représentés. Pour faciliter la lecture des dessins, les mêmes éléments portent les mêmes références d'une figure à l'autre.

On notera que dans ce document, les termes "horizontal", "vertical", "inférieur", "supérieur", "haut", "bas", "avant", "arrière", "longitudinal", "transversal", employés pour décrire la machine à café automatique font référence à cette machine reposant sur un plan de travail, en situation d'usage.

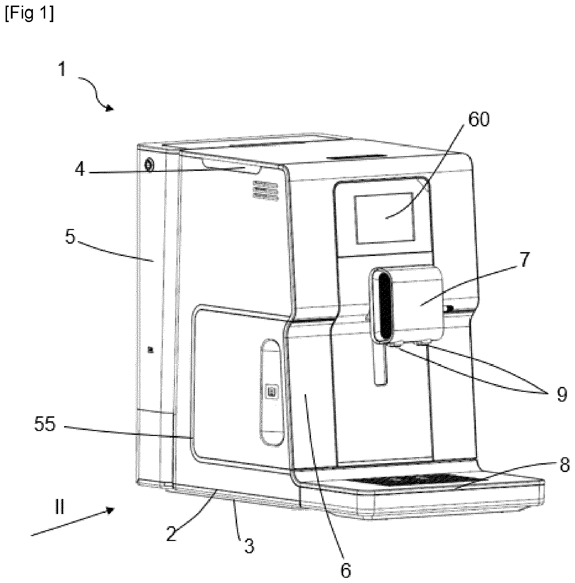

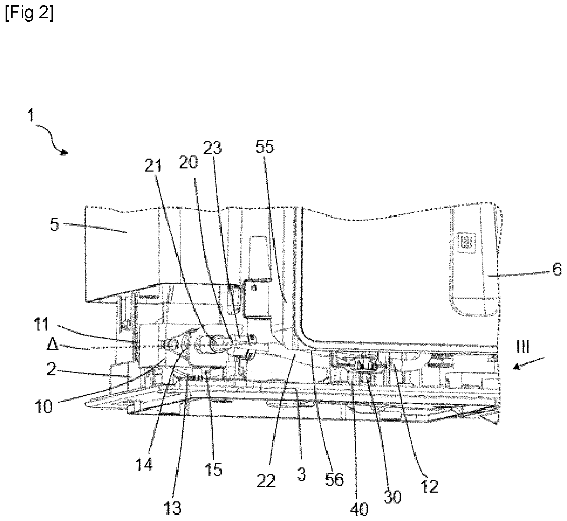

Dans l'exemple de réalisation représenté aux figures 1 à 4, une machine à café automatique 1 comporte un bâti 2 muni d'un socle 3 destiné à reposer sur un plan de travail. La machine à café automatique 1 comporte un réservoir 5 formant une alimentation en eau froide, une pompe 10 électromagnétique (Fig. 2) et un groupe d'infusion (non représentés sur les figures) muni d'une chambre d'infusion alimentée en mouture de café par un broyeur à grains de café. Le groupe d'infusion comporte un piston presseur comprimant la mouture dans la chambre d'infusion pour former une galette de mouture. Le groupe d'infusion comporte un dispositif d'expulsion de la galette de mouture dans un bac 6 de récupération des galettes de mouture. Un tel groupe d'infusion a été décrit plus en détail dans le brevet EP1827182. La machine à café automatique 1 comporte une chaudière (non représentée sur les figures) qui permet de produire de l'eau chaude et/ou de la vapeur.

La machine à café automatique 1 comporte une tête de distribution 7 du café (Fig.1) qui est agencée sur le bâti 2 et qui comprend des sorties de café 9 reliées à la chambre d'infusion. La tête de distribution 7 est agencée au-dessus d'un repose tasse 8. Le repose tasse 8 s'étend dans le prolongement de du socle 3. La tête de distribution 7 est montée mobile en translation verticale pour permettre à un utilisateur d'ajuster la position des sorties de café 9 à la hauteur de la tasse. La machine à café automatique 1 comporte un bac à grains de café 4 agencé au-dessus du broyeur. La machine à café automatique 1 comporte un circuit de commande 60 pour gérer la réalisation d'une boisson à partir des instructions données par un utilisateur.

La pompe 10 électromagnétique alimente en eau un distributeur hydraulique (non représentés sur les figures) qui est piloté par le circuit de commande 60 pour répartir l'eau vers les différents organes de la machine à café automatique 1. La pompe 10 est reliée au bâti 2 par des dispositifs de connexion mécaniques amortissants (non illustrés sur les figures). Conformément à la figure 2, la pompe 10 comporte un orifice d'entrée 11 alimenté en eau par le réservoir 5, un orifice de sortie 12 et un système d'entraînement 13 de liquide pour mettre sous pression et faire circuler l'eau de l'orifice d'entrée 11 vers l'orifice de sortie 12. Le système d'entrainement 13 de liquide comporte un piston 14 et une bobine 15 qui s'étendent selon un axe Δ. L'alimentation électrique de la bobine 15 par le circuit de commande 60 imprime au piston 14 un mouvement alternatif selon l'axe Δ. La pompe 10 comporte un conduit aval 20 qui relie le système d'entrainement 13 de liquide à l'orifice de sortie 12. Le conduit aval 20 comporte une portion rigide 21 coudée, une portion souple 22 et un dispositif amortisseur 30. La portion souple 22 relie fluidiquement la portion rigide 21 coudée au dispositif amortisseur 30. la portion souple 22 s'étend sur une longueur égale à cinq centimètres. La portion rigide 21 comporte un conduit annexe 23 destiné à évacuer les surpressions générées dans la pompe 10.

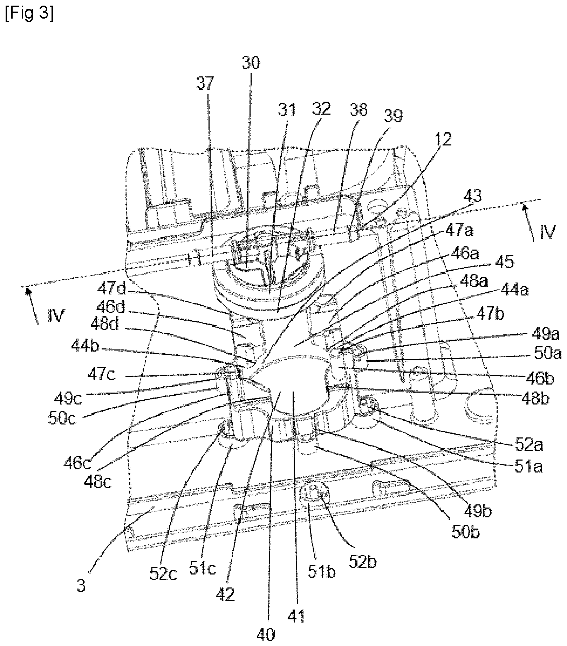

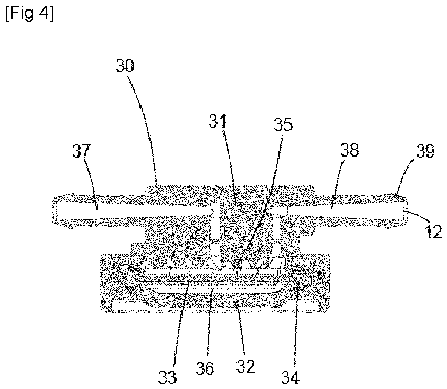

Conformément aux figures 3 et 4, le dispositif amortisseur 30 présente une forme générale cylindrique. Le dispositif amortisseur comporte un corps supérieur 31, un corps inférieur 32 et une membrane souple 33 circulaire munie d'une bordure périphérique 34. La membrane souple 33 est agencée entre le corps supérieur 31 et le corps inférieur 32 qui maintiennent en la pinçant la bordure périphérique 34. Le corps supérieur 31 et la membrane souple 33 définissent une cavité d'amortissement 35. Le corps inférieur 32 et la membrane souple 33 définissent une cavité fermée 36 remplie d'air. Le corps supérieur 31 comporte un canal d'entrée 37 et un canal de sortie 38. Le canal d'entrée 37 relie fluidiquement la portion souple 22 du conduit aval 20 à la cavité d'amortissement 35. Le canal de sortie 38 comporte une extrémité libre 39 qui comprend l'orifice de sortie 12. Le canal de sortie 38 relie fluidiquement la cavité d'amortissement 35 et l'orifice de sortie 12. La membrane souple 33 est réalisée en un matériau choisi parmi un silicone, un caoutchouc ou un élastomère thermoplastique. Les pulsations générées par le piston 14 oscillant dans le liquide qui entre dans la chambre d'amortissement 35 sont amorties par la déformation de la membrane souple 33 dans la cavité fermée 36 remplie d'air.

Conformément à la figure 3, la machine à café automatique 1 comporte un support souple 40 qui comprend un logement de réception 41 du dispositif amortisseur 30. Le support souple 40 est réalisé en un matériau choisi parmi un silicone, un caoutchouc ou un élastomère thermoplastique. Le logement de réception 41 comporte une paroi de fond 42, une paroi latérale 43 qui s'étend vers le haut et une ouverture supérieure 45. La paroi latérale 43 comporte deux échancrures 44a, 44b de passage du canal d'entrée 37 et du canal de sortie 38 du corps supérieur 31. Le support souple 40 comporte quatre piliers 46a, 46b, 46c, 46d qui s'étendent vers le haut dans le prolongement de la paroi latérale. Les piliers 46a, 46b, 46c, 46d comportent des faces supérieures 47a, 47b, 47c, 47d qui s'inscrivent dans un plan horizontal. Chaque pilier 46a, 46b, 46c, 46d comporte un retour de matière 48a, 48b, 48c, 48d qui s'étend radialement, vers l'intérieur du logement de réception 41 pour bloquer en position le dispositif amortisseur 30. Lors du montage, les deux échancrures 44a, 44b permettent une déformation de la paroi de fond 42 pour écarter les retours de matière 48a, 48b, 48c, 48d et autoriser le passage du dispositif amortisseur 30 dans le logement de réception 41. Ainsi, le dispositif amortisseur 30 est monté serré dans le logement de réception 41, notamment au niveau de la paroi latérale 43. Tel que visible à la figure 3, le support souple 40 comporte trois pieds 49a, 49b, 49c répartis de manière équidistante sur sa périphérie. Chaque pied 49a, 49b, 49c comporte une portion annulaire 50a, 50b, 50c qui s'étend verticalement et qui est reliée au support souple 40. Le socle 3 du bâti 2 comporte trois éléments de réception 51a, 51b, 51c des trois pieds 49a, 49b, 49c. Chaque élément de réception 51a, 51b, 51c comporte une cavité 52a, 52b, 52c verticale, ouverte vers le haut et de forme complémentaire à la forme de chaque pied 49a, 49b, 49c. Les trois pieds 49a, 49b, 49c sont insérés en force dans les trois cavités 52a, 52b, 52c pour positionner et maintenir le support souple 40 sur le socle 3 du bâti 2.

Conformément à la figure 2, le bâti 2 comporte un boitier latéral 55 de réception du bac 6 de récupération des galettes de mouture. Le boitier latéral 55 comprend une paroi inférieure 56 qui est agencée au-dessus du support souple 40. La paroi inférieure 56 s'étend dans un plan légèrement décalé en hauteur par rapport au plan dans lequel s'inscrivent les faces supérieures 47a, 47b, 47c, 47d des piliers 46a, 46b, 46c, 46d.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention défini par les revendications.

Ainsi, dans une variante de réalisation non illustrée, la pompe est une pompe rotative à palettes dont le système d'entrainement comporte un rotor muni de plusieurs lames qui coulissent radialement et assurent le transfert du fluide pompé.

## Revendications

1. Machine à café automatique (1) comportant une pompe (10) comprenant un orifice d'entrée (11), un orifice de sortie (12), un système d'entraînement (13) de liquide pour mettre sous pression et faire circuler un liquide de l'orifice d'entrée (11) vers l'orifice de sortie (12) et un conduit aval (20) reliant en communication fluidique le système d'entraînement (13) à l'orifice de sortie (12) de pompe (10), ledit conduit aval (20) comprenant un dispositif amortisseur (30) pour amortir les vibrations générées par le système d'entraînement (13) dans le liquide sous pression qui circule vers l'orifice de sortie (12), **caractérisée en ce que** le conduit aval (20) comporte une portion souple (22) agencée entre le système d'entrainement (13) et le dispositif amortisseur (30) et **en ce que** le dispositif amortisseur (30) est agencé dans un support souple (40).

2. Machine à café automatique (1) selon la revendication 1, **caractérisée en ce que** la portion souple (22) s'étend sur une longueur supérieure à deux centimètres.

3. Machine à café automatique (1) selon l'une quelconque des revendications 1 à 2, **caractérisée en ce que** la portion souple (22) s'étend de manière rectiligne.

4. Machine à café automatique (1) selon l'une quelconque des revendications 1 à 3, **caractérisée en ce que** le dispositif amortisseur (30) comporte un corps supérieur (31), un corps inférieur (32) et une membrane souple (33), la membrane souple (33) étant agencée entre le corps supérieur (31) et le corps inférieur (32).

5. Machine à café automatique (1) selon l'une quelconque des revendications 1 à 4, **caractérisée en ce que** le support souple (40) est réalisé en un matériau choisi parmi un silicone, un caoutchouc ou un élastomère thermoplastique.

6. Machine à café automatique (1) selon l'une quelconque des revendications 1 à 5, **caractérisée en ce qu'**elle comporte un bâti (2), le support souple (40) étant fixé sur le bâti (2).

7. Machine à café automatique (1) selon la revendication 6, **caractérisée en ce que** le support souple (40) comporte un logement de réception (41) du dispositif amortisseur (30) et au moins deux pieds (49a, 49b, 49c) agencés latéralement au logement de réception (41) et **en ce que** le bâti (2) comporte un socle (3) comprenant au moins deux éléments de réception (51a, 51b, 51c), les au moins deux pieds (49a, 49b, 49c) étant engagés dans les au moins deux éléments de réception (51a, 51b, 51c).

8. Machine à café automatique (1) selon la revendication 7, **caractérisée en ce que** le bâti (2) comporte un boitier latéral (55), le boitier latéral (55) comportant une paroi inférieure (56) qui coiffe le support souple (40) pour le maintenir sur le bâti (2).

9. Machine à café automatique (1) selon l'une quelconque des revendications 7 à 8, **caractérisée en ce que** le logement de réception (41) comporte une ouverture supérieure (45) d'introduction du dispositif amortisseur (30).

10. Machine à café automatique (1) selon l'une quelconque des revendications 1 à 9, **caractérisée en ce que** la pompe (10) est une pompe électromagnétique et le système d'entraînement (13) de liquide comporte un piston (14) et une bobine (15).

## Patentansprüche

1. Automatische Kaffeemaschine (1), die eine Pumpe (10) aufweist, die eine Einlassöffnung (11), eine Auslassöffnung (12), ein Flüssigkeitsantriebssystem (13) zum Unterdrucksetzen und Zirkulieren einer Flüssigkeit von der Einlassöffnung (11) zur Auslassöffnung (12) und eine stromabwärtige Leitung (20) umfasst, die in Fluidverbindung das Antriebssystem (13) mit der Auslassöffnung (12) der Pumpe (10) verbindet, wobei die stromabwärtige Leitung (20) eine Dämpfungsvorrichtung (30) zum Dämpfen von Vibrationen umfasst, die durch das Antriebssystem (13) in der Druckflüssigkeit erzeugt werden, die zur Auslassöffnung (12) zirkuliert, **dadurch gekennzeichnet, dass** die stromabwärtige Leitung (20) einen flexiblen Abschnitt (22) aufweist, der zwischen dem Antriebssystem (13) und der Dämpfungsvorrichtung (30) angeordnet ist, und dadurch, dass die Dämpfungsvorrichtung (30) in einem flexiblen Träger (40) angeordnet ist.

2. Automatische Kaffeemaschine (1) nach Anspruch 1, **dadurch gekennzeichnet, dass** sich der flexible Abschnitt (22) über eine Länge von mehr als zwei Zentimetern erstreckt.

3. Automatische Kaffeemaschine (1) nach einem der Ansprüche 1 bis 2, **dadurch gekennzeichnet, dass** sich der flexible Abschnitt (22) geradlinig erstreckt.

4. Automatische Kaffeemaschine (1) nach einem der Ansprüche 1 bis 3, **dadurch gekennzeichnet, dass** die Dämpfungsvorrichtung (30) einen oberen Körper (31), einen unteren Körper (32) und eine flexible Membran (33) aufweist, wobei die flexible Membran (33) zwischen dem oberen Körper (31) und dem unteren Körper (32) angeordnet ist.

5. Automatische Kaffeemaschine (1) nach einem der Ansprüche 1 bis 4, **dadurch gekennzeichnet, dass** der flexible Träger (40) aus einem Material hergestellt ist, das aus Silikon, Gummi oder einem thermoplastischen Elastomer ausgewählt ist.

6. Automatische Kaffeemaschine (1) nach einem der Ansprüche 1 bis 5, **dadurch gekennzeichnet, dass** sie ein Gestell (2) aufweist, wobei der flexible Träger (40) auf dem Gestell (2) befestigt ist.

7. Automatische Kaffeemaschine (1) nach Anspruch 6, **dadurch gekennzeichnet, dass** der flexible Träger (40) eine Aufnahmekammer (41) der Dämpfungsvorrichtung (30) und mindestens zwei Füße (49a, 49b, 49c) aufweist, die seitlich von der Aufnahmekammer (41) angeordnet sind, und dass das Gestell (2) einen Sockel (3) aufweist, der mindestens zwei Aufnahmeelemente (51a, 51b, 51c) umfasst, wobei die mindestens zwei Füße (49a, 49b, 49c) in den mindestens zwei Aufnahmeelementen (51a, 51b, 51c) im Eingriff sind.

8. Automatische Kaffeemaschine (1) nach Anspruch 7, **dadurch gekennzeichnet, dass** das Gestell (2) ein seitliches Gehäuse (55) aufweist, wobei das seitliche Gehäuse (55) eine untere Wand (56) aufweist, die den flexiblen Träger (40) bedeckt, um ihn auf dem Gestell (2) zu halten.

9. Automatische Kaffeemaschine (1) nach einem der Ansprüche 7 bis 8, **dadurch gekennzeichnet, dass** die Aufnahmekammer (41) eine obere Öffnung (45) zur Einführung der Dämpfungsvorrichtung (30) aufweist.

10. Automatische Kaffeemaschine (1) nach einem der Ansprüche 1 bis 9, **dadurch gekennzeichnet, dass** die Pumpe (10) eine elektromagnetische Pumpe ist und das Flüssigkeitsantriebssystem (13) einen Kolben (14) und eine Spule (15) umfasst.

## Claims

1. Automatic coffee machine (1) comprising a pump (10) comprising an inlet orifice (11), an outlet orifice (12), a liquid drive system (13) to pressurize and make a liquid circulate from the inlet orifice (11) to the outlet orifice (12) and a downstream conduit (20) connecting in fluid communication, the drive system (13) to the outlet orifice (12) of the pump (10), said downstream conduit (20) comprising a damping device (30) to dampen the vibrations generated by the drive system (13) on the pressurized liquid which circulates to the outlet orifice (12), **characterized in that** the downstream conduit (20) comprises a flexible portion (22) arranged between the drive system (13) and the damping device (30), and **in that** the damping device (30) is arranged in a flexible support (40).

2. Automatic coffee machine (1) according to claim 1, **characterized in that** the flexible portion (22) extends over a length greater than two centimeters.

3. Automatic coffee machine (1) according to any one of claims 1 to 2, **characterised in that** the flexible portion (22) extends rectilinearly.

4. Automatic coffee machine (1) according to any one of claims 1 to 3, **characterized in that** the damping device (30) comprises an upper body (31), a lower body (32) and a flexible membrane (33), the flexible membrane (33) being arranged between the upper body (31) and the lower body (32).

5. Automatic coffee machine (1) according to any one of claims 1 to 4, **characterized in that** the flexible support (40) is made of a material chosen from among a silicone, a rubber or a thermoplastic elastomer.

6. Automatic coffee machine (1) according to any one of claims 1 to 5, **characterized in that** it comprises a frame (2), the flexible support (40) being fixed onto the frame (2).

7. Automatic coffee machine (1) according to claim 6, **characterized in that** the flexible support (40) comprises a housing (41) for receiving the damping device (30) and at least two feet (49a, 49b, 49c) arranged laterally to the receiving housing (41), and **in that** the frame (2) comprises a base (3) comprising at least two receiving elements (51a, 51b, 51c), the at least two feet (49a, 49b, 49c) being engaged in the at least two receiving elements (51a, 51b, 51c).

8. Automatic coffee machine (1) according to claim 7, **characterized in that** the frame (2) comprises a lateral casing (55), the lateral casing (55) comprising a lower wall (56) which covers the flexible support (40) to hold it on the frame (2).

9. Automatic coffee machine (1) according to any one of claims 7 to 8, **characterized in that** the receiving housing (41) comprises an upper opening (45) for introducing the damping device (30).

10. Automatic coffee machine (1) according to any one of claims 1 to 9, **characterized in that** the pump (10) is an electromagnetic pump and the liquid drive system (13) comprising a piston (14) and a coil (15).
